# EUROPÄISCHE PATENTANMELDUNG

(11) **EP 2 138 822 A2**
(43) Veröffentlichungstag der Anmeldung: **30.12.2009**
(21) Anmeldenummer: 09007927.8
(22) Anmeldetag: 17.06.2009
(51) Int. Cl.: G01M 17/007

(54) **Vorrichtung und Verfahren zum Herbeiführen von kollisionsnahen und kollisionsfreien Situationen zwischen einem Testfahrzeug und einem Kollisionsobjekt und Einrichtung zur Funktionsprüfung eines Fahrerassistenzsystems**

(30) Priorität: 27.06.2008 DE 102008030612
(71) Anmelder: Audi AG, 85045 Ingolstadt (DE)
(72) Erfinder: Riedel, Helmut, Dr., 86697 Oberhausen (DE); Mielich, Wolfgang, 85055 Ingolstadt (DE); Bock, Thomas, 85049 Ingolstadt (DE); Heselhaus, Ulrich, 85049 Ingolstadt (DE)
(74) Vertreter: Thielmann, Frank

(57) **Zusammenfassung**

Die Erfindung betrifft eine Vorrichtung zum Herbeiführen von kollisionsnahen jedoch kollisionsfreien Situationen zwischen einem Testfahrzeug (2) und einem Kollisionsobjekt (3, 3', 3", 3"'), mit dem Testfahrzeug (2), dem Kollisionsobjekt (3, 3', 3", 3"') und einer Spurvorgabeeinrichtung (5), welche für zumindest das Testfahrzeug (2) oder zumindest das Kollisionsobjekt (3, 3', 3", 3''') bei der Annäherung an das jeweils andere Element (2; 3, 3', 3", 3"') und einer Vorbeiführung an dem jeweils anderen Element (2; 3, 3', 3", 3"') zur Vorgabe einer kollisionsnahen und kollisionsfreien Spur (8, 8', 8", 9, 16) ausgebildet ist. Die Erfindung betrifft auch ein Verfahren zum Herbeiführen von kollisionsnahen kollisionsfreien Situationen zwischen dem Testfahrzeug (2) und dem Kollisionsobjekt (3, 3', 3", 3'''), sowie eine Einrichtung zur Funktionsprüfung eines Fahrerassistenzsystems (14).

## Beschreibung

Die Erfindung betrifft eine Vorrichtung und ein Verfahren zum Herbeiführen von kollisionsnahen jedoch kollisionsfreien Situationen zwischen einem Testfahrzeug und einem Kollisionsobjekt, sowie eine Einrichtung zur Funktionsprüfung eines Fahrerassistenzsystems.

Aus der JP 09257633 A ist eine Testvorrichtung für Fahrzeuge bekannt, bei denen diese Testfahrzeuge nur geradlinig bewegt werden können und jeweils über ein Seil verbunden sind, durch welche die Bewegungsrichtung vorgegeben ist. Ein Fahrzeug ist auf einer Plattform angeordnet, welche um eine Drehachse gedreht werden kann, so dass ggf. die geradlinigen Bewegungsrichtungen der beiden Fahrzeuge relativ zueinander verstellt werden können und ggf. auch in einem Winkel zueinander angeordnet werden können.

Aus der WO 01/73392 A1 ist ebenfalls eine Testvorrichtung bekannt, bei der zwei separate Fahrzeuge jeweils auf Schienenbahnen geradlinig bewegt werden können, wobei jedes Fahrzeug mit einem Seil verbunden ist, um die Bewegung erzeugen zu können. Auch hier kann die relative Einstellung der geradlinigen Bewegungsrichtungen zueinander durch eine Verdrehung bzw. ein Verschwenken einer der beiden Schienen erfolgen.

Bei beiden bekannten Testvorrichtungen können nur Tests realisiert werden, bei denen eine tatsächliche Kollision zwischen den Fahrzeugen auftritt.

Kollisionsversuche können derzeit in der Crash-Messtechnik zur Beurteilung der Strukturfestigkeit und der Wirksamkeit von Schutzsystemen der passiven Sicherheit herangezogen werden. Für den Test von fortgeschrittenen Fahrerassistenzsystemen, beispielsweise ACC (Adaptive Cruise Control)-Systemen, sind Annäherungsfahrten erforderlich, die hinsichtlich des Minimalabstands und der Fahrzeugverzögerungen bzw. der Fahrzeugbeschleunigungen den Charakter von Beinahe-Kollisionen erreichen. Noch extremer gestaltet sich der Test von Unfallfrüherkennungssystemen (Pre-Crash-Schutzsystemen), da hier ausschließlich unter den Randbedingungen von Beinahe-Kollisionen Funktionsprüfungen erfolgen können.

Insbesondere Annäherungsfahrten an die Seite eines Versuchsfahrzeugs oder Querfahrten zweier Fahrzeuge sind schwierig zu realisieren, weil die zerstörungsfreie Prüfung ein äußerst genaues, zeitlich abgestimmtes Fahrmanöver erfordert. Daher beinhalten derartige Testfahrten ein unzumutbar hohes Gefährdungspotential der am Versuch beteiligten Personen.

Katapultversuche, bei denen ein Prüfkörper auf das Testfahrzeug geschossen wird, sind nur dann gefahrlos, wenn ein geeigneter Abfangmechanismus für die Prüfkörper vorhanden ist. Auch ist mit derartigen Versuchseinrichtungen nur eine eingeschränkte Anzahl von Szenarien umsetzbar.

Während bei der üblichen Crashmesstechnik heutzutage bereits standardisierte Crashbahnen und Schlittenprüfstände im Einsatz sind, existieren bei der Versuchstechnik zur Untersuchung der Urifallfrüherkennungsphase bisher kaum allgemein gültige Prüfstände. Die Untersuchung der Unfallfrüherkennungsphase erfordert Annäherungsfahrzeuge bzw. die schnelle Annäherung eines Prüfkörpers an ein Testfahrzeug. Im Fall der knappen Vorbeifahrt der Fahrzeuge muss ein ausreichender Sicherheitsabstand eingehalten werden. Zudem ist ein extrem genaues Fahrmanöver erforderlich, um unerwünschte Kollisionen sicher ausschließen zu können. Reproduzierbare Randbedingungen sind daher bisher nicht oder nur sehr schwer zu realisieren.

Alternative Fahrmanöver, bei denen ein Prüfkörper an einem Ausleger auf das zu prüfende Fahrzeug zu bewegt wird, weisen ebenfalls nicht die erforderliche Reproduzierbarkeit auf. Zudem stellt das Trägerfahrzeug des Auslegers ein unerwünschtes Zielobjekt bei der Versuchsdurchführung dar.

Die bisher bekannten Systeme, mit denen auch Unfallfrüherkennungsversuchstechniken realisiert wurden, eignen sich nur sehr eingeschränkt für die Untersuchung von Situationen, in denen nur noch sehr geringe Kollisionsabstände und daraus resultierende sehr kurze Zeiten bis zur Kollision bestehen. Sie decken nur einen geringen Teil der benötigten Fahrszenen ab und weisen nicht die erforderlich Reproduzierbarkeit auf. Der größte Nachteil besteht jedoch in der sehr eingeschränkten Möglichkeit, zur Kollisionsvermeidung schnelle Bewegungsänderungen kurz vor dem Aufprall auf das Testfahrzeug realisieren zu können. Selbst bei autonom fahrenden leichten Prüfkörpern ist dies nicht mit ausreichender Präzision und Zuverlässigkeit möglich.

Es ist Aufgabe der vorliegenden Erfindung, eine Vorrichtung und ein Verfahren zum Herbeiführen von kollisionsnahen und dennoch kollisionsfreien Situationen zu schaffen, welche eine hohe Reproduzierbarkeit ermöglichen und darüber hinaus die Anzahl der möglichen darzustellenden Fahrszenen erhöhen.

Diese Aufgabe wird durch eine Vorrichtung, welche die Merkmale nach Anspruch 1 aufweist, eine Einrichtung, die die Merkmale nach Anspruch 18 aufweist oder ein Verfahren, welches die Merkmale nach Anspruch 19 aufweist, gelöst.

Eine erfindungsgemäße Vorrichtung zum Herbeiführen von kollisionsnahen und dennoch kollisionsfreien Situationen zwischen einem Testfahrzeug und einem Kollisionsobjekt umfasst das Testfahrzeug, das Kollisionsobjekt und eine Spurvorgabeeinrichtung. Die Spurvorgabeeinrichtung ist zumindest für das Testfahrzeug oder zumindest das Kollisionsobjekt bei der Annäherung an das jeweils andere Element bei der Vorbeiführung an dem jeweils anderen Element zur Vorgabe einer kollisionsnahen kollisionsfreien Spur ausgebildet. Die Vorrichtung ist daher so konzipiert, dass bei der Annäherung des Kollisionsobjekts an das Testfahrzeug oder des Testfahrzeugs an das Kollisionsobjekt dieses nicht in einem tatsächlichen Zusammenstoß endet, sondern dass Szenarien erzeugt werden können, bei denen ein kollisionsfreies aneinander Vorbeiführen des Testfahrzeugs und des Kollisionsobjekts gewährleistet werden kann und dennoch eine sehr realitätsnahe und bis zu sehr geringen Minimalabständen mögliche Heranführung des Testfahrzeugs und des Kollisionsobjekts zueinander ermöglicht werden kann. Sowohl beim Annähern als auch dann wieder beim Entfernen können somit Szenarien gebildet werden, welche unterschiedlichste Fahrsituationen darstellen und somit ein hohes und sehr realitätsnahes Testpotential für unterschiedlichste Situationen ermöglichen.

Die Spurvorgabeeinrichtung ermöglicht dabei in flexibler Weise die Bewegbarkeit des Testfahrzeugs und vorzugsweise die Bewegbarkeit des Kollisionsobjekts, wobei das jeweils andere Element, sprich das Kollisionsobjekt oder das Testfahrzeug, dann stillsteht. Durch eine derartige Ausgestaltung der Vorrichtung kann auch eine hohe Reproduzierbarkeit von Testszenarien erfolgen. Gerade für Systeme, bei welchen Informationen über das Verhalten vor einer Beinahe-Kollision und auch nach dem aneinander Vorbeifahren ausgewertet und analysiert werden müssen, bietet diese Vorrichtung eine sehr präzise und dennoch hochfunktionelle Ausgestaltung. Nicht zuletzt kann durch die spezielle Ausgestaltung der Vorrichtung, insbesondere der Spurvorgabeeinrichtung, auch bei unterschiedlichsten darzustellenden Fahrszenarien ein verschleißarmes System dahingehend gebildet werden, dass Kollisionen zwischen den Testteilnehmern, dem Kollisionsobjekt und dem Testfahrzeug, sicher verhindert werden können. Derartige Untersuchungsmöglichkeiten sind bei den bekannten Testvorrichtungen nicht möglich.

Vorzugsweise wird das Testfahrzeug ortsfest angeordnet, und durch die Spurvorgabeeinrichtung ist eine Spur für das bewegte Kollisionsobjekt vorgegeben. Gerade diese Ausgestaltung ermöglicht auch bei sehr schwierigen Fahrszenarien ein äußerst präzises Darstellen dieser, da das Kollisionsobjekt über die Spurvorgabeeinrichtung äußert nahe und exakt an das Testfahrzeug herangeführt werden kann und dennoch kollisionsfrei an diesem vorbeigeführt werden kann. Gerade in dem Testfahrzeug können daher eine Vielzahl von zu testenden Systemen, insbesondere Fahrerassistenzsysteme, installiert werden und die Informationen können entsprechend ausgewertet werden. Aufwendige und komplexe Analysemethoden können gerade bei einem stehenden Testfahrzeug besonders gut durchgeführt werden, da Anschlüsse an externe Auswerteeinheiten und dergleichen problemlos ermöglich sind, wenn sich das Testfahrzeug nicht fortbewegt.

Besonders bevorzugt kann vorgesehen sein, dass das Testfahrzeug auf einer drehbaren Plattform angeordnet ist, insbesondere ortsfest angeordnet ist. Durch diese Ausgestaltung kann der Flexibilitätsgrad der Vorrichtung nochmal erhöht werden, da zum einen die positionsstabile Anordnung des Testfahrzeugs für sich betrachtet auf der Plattform gewährleistet werden kann, andererseits diese Plattform zusammen mit dem Testfahrzeug im Hinblick auf ihre Ausrichtung verändert werden kann. Gerade dann kann man, wenn unterschiedlichste Winkelanordnungen des Testfahrzeugs zum Kollisionsobjekt erforderlich sind, dies durch diese Ausgestaltung besonders exakt darstellen.

Vorzugsweise ist das Testfahrzeug auf einer Plattform ortsfest angeordnet, wobei die Plattform darüber hinaus so bewegbar ist, dass auf das Testfahrzeug Nick- und/oder Wankbewegungen übertragbar sind. Dadurch können auch bei einem Nichtfortbewegen im Sinne eines tatsächlichen Fahrens des Fahrzeugs sehr realitätsnahe Bewegungen des Testfahrzeugs erreicht werden. Gerade durch die Möglichkeit, dass das Testfahrzeug im stehenden Zustand geneigt und gekippt werden kann, können diesbezügliche realitätsnahe tatsächliche Fortbewegungsszenarien auf unterschiedlichsten Fahrbahnuntergründen realistisch dargestellt werden.

Insbesondere kann hier vorgesehen sein, dass die Plattform beispielsweise ein Vier-Stempel-Prüfstand ist.

Vorzugsweise ist die Spurvorgabeeinrichtung zur Vorgabe einer zumindest teilweise nicht-geradlinigen Spur ausgebildet. Dies ermöglicht eine besonders vorteilhafte Ausgestaltung dahingehend, dass die Möglichkeit der darzustellenden Fahrszenarien wesentlich erhöht werden kann.

Vorzugsweise ist die Spurvorgabeeinrichtung so konzipiert, dass die durch die Spurvorgabeeinrichtung vorgegebene Spur vor dem Ort der maximalen Annäherung, d.h. das Erreichen des Minimalabstands, zwischen dem Testfahrzeug und dem Kollisionsobjekt zumindest eine erste nicht-geradlinige Teilspur aufweist und/oder nach dem Ort der maximalsten Annäherung zwischen dem Testfahrzeug und dem Kollisionsobjekt zumindest eine zweite nicht-geradlinige Teilspur vorgesehen ist.

Insbesondere sind die erste nicht-geradlinige Teilspur und die zweite nicht-geradlinige Teilspur so ausgebildet, dass diese beiden Teilspuren unterschiedliche nicht-geradlinige Verläufe aufweisen. Dies bedeutet beispielsweise, dass die erste nicht-geradlinige Teilspur beispielsweise einen anderen Krümmungsradius aufweisen kann als die zweite nicht-geradlinige Teilspur. Es kann jedoch auch vorgesehen sein, dass die erste nicht-geradlinige Teilspur lediglich eine kontinuierliche Krümmung in eine Richtung aufweist, wobei die zweite nicht-geradlinige Teilspur beispielsweise eine S-Form aufweist. Diese Unterschiedlichkeiten im Hinblick auf Formgebung, Länge, Orientierung im Raum etc. sind lediglich beispielhaft und können in vielfältiger Weise ausgestaltet sein. Selbstverständlich können die oben genannten Ausführungen für die erste nicht-geradlinige Teilspur zusätzlich oder anstatt dazu auch für die zweite nicht-geradlinige Teilspur vorgesehen sein und umgekehrt. Bewegungsabläufe und die realistische Darstellung von unterschiedlichsten Fahrszenarien beim Annähern von zwei Verkehrsobjekten können dadurch nochmals individualisiert, spezifiziert und präzisiert werden.

Vorzugsweise weist die durch die Spurvorgabeeinrichtung vorgegebene Spur einen vor dem Ort der maximalsten Annäherung zwischen dem Testfahrzeug und dem Kollisionsobjekt ausgebildeten ersten Spurverlauf auf und einen nach dem Ort der maximalsten Annäherung zwischen dem Testfahrzeug und dem Kollisionsobjekt ausgebildeten und zum ersten unterschiedlichen zweiten Spurverlauf auf, wobei der Wechsel zwischen dem ersten und dem zweiten Spurverlauf am Ort der maximalsten Annäherung zwischen dem Testfahrzeug und dem Kollisionsobjekt ausgebildet ist. Diese spezifische Ausgestaltung der Vorrichtung ermöglich somit in exakter Weise, dass genau dann, wenn sich die beiden Testteilnehmer, das Testfahrzeug und das Kollisionsobjekt, positionell am nächsten zueinander befinden, die Änderungen des Spurverlaufs eintritt. Gerade dadurch können dann im Weiteren unerwünschte Kollisionen vermieden werden und dennoch Fahrszenarien dargestellt werden, welche präzise bis zum Annähern an eine Minimaldistanz durchgeführt werden können.

Vorzugsweise ist der Wechsel des Spurverlaufs durch die Spurvorgabeeinrichtung automatisch und aktiv erzeugbar. Dadurch kann ein selbstgesteuertes System geschaffen werden, welches es ermöglicht, dass äußerst nahe Annäherungen zwischen dem Testfahrzeug und dem Kollisionsobjekt realisiert werden können und dennoch auch bei relativ hohen Geschwindigkeiten eine Kollision vermieden wird und dennoch sehr exakt an dem Ort der maximalsten Annäherung der Wechsel dieses Spurverlaufs herbeigeführt werden kann.

Auch sehr prekäre Fahrmanöver von gleichen oder sehr unterschiedlichen Testobjekten können dadurch realisiert werden, wobei in diesem Zusammenhang das Kollisionsobjekt ebenfalls ein Fahrzeug, ein Motorrad, ein Fußgänger, ein Radfahrer, ein Nutzfahrzeug, beispielsweise ein Lastkraftwagen oder dergleichen, sein kann. Demzufolge können auch unterschiedlichste Annäherungsgeschwindigkeiten realitätsnah dargestellt werden.

Vorzugsweise weist die Spurvorgabeeinrichtung eine Seilzugvorrichtung mit zumindest einem Seil auf, mittels welchem das Kollisionsobjekt verbindbar ist und entlang des zweiten Verlaufs der Spur, welche durch die Spurvorgabeeinrichtung vorgebbar ist, bewegbar ist.

Insbesondere weist die Seilzugvorrichtung eine Fangeinheit am Seil auf, welche automatisch abhängig vom Ort des Kollisionsobjekts während dessen Fortbewegen, insbesondere am Ort der maximalsten Annäherung zwischen dem Testfahrzeug und dem Kollisionsobjekt, in eine Fangeinheit am Kollisionsobjekt eingreift. Es kann somit stets gewährleistet werden, dass sich somit das Kollisionsobjekt vor dem Ort der maximalsten Annäherung an das Testfahrzeug quasi frei bewegen kann und in diesem Zusammenhang auch beispielsweise autonom fahren kann oder ferngesteuert oder vorrichtungsgeführt fortbewegt werden kann, und am Ort dieser maximalsten Annäherung mit der Seilzugvorrichtung gekoppelt werden kann.

Die Fangeinheiten und die Anbringung sowie die Realisierung der automatischen Verbindung kann in diesem Zusammenhang ähnlich einem Fangmechanismus, wie er bei einem Flugzeugträger zum Einfangen eines landenden Flugzeugs eingesetzt wird, verwendet werden. Die Seilkonstruktion der Seilzugvorrichtung kann mit variablen Bodenverankerungen und/oder variablem Seilantrieb und/oder einer Seilbremse und/oder einer elektronischen Steuerung bzw. optional einer Regelung, ausgebildet sein.

Insbesondere ist vorgesehen, dass die Seilzugvorrichtung zur dynamischen Längenveränderung des Seils während der Bewegung des Kollisionsobjekts nach dem Ort der maximalsten Annäherung zwischen dem Testfahrzeug und dem Kollisionsobjekt ausgebildet ist. Dadurch kann quasi geführt durch die Längenveränderungen des Seils eine sehr spezifische und individuelle Vorgabe der Spur für das Kollisionsobjekt nach dem Ort der maximalsten Annäherung ermöglicht werden. Dies kann für spezifische Fahrszenarien und Untersuchungszwecke besonders wichtige Informationen liefern.

Selbstverständlich kann vorgesehen sein, dass diese dynamische Längenveränderung des Seils während der Bewegung des Kollisionsobjekts auch vor dem Ort der maximalsten Annäherung zwischen dem Testfahrzeug und dem Kollisionsobjekt ausgebildet sein kann, wenn bei einer derartigen Ausgestaltung das Kollisionsobjekt bereits auf diesem Weg mit dem Seil verbunden ist.

Vorzugsweise bleibt die durch die Spurvorgabeeinrichtung vorgegebene Spur während der Bewegung des Testfahrzeugs oder des Kollisionsobjekts unverändert. Beispielsweise kann in diesem Zusammenhang vorgesehen sein, dass sich das Kollisionsobjekt auf einer bereits vor dem Starten und somit vor dem Beginn des Bewegens des Kollisionsobjekts vorgegebenen Spur bis zum Ende bewegt. Dies kann eine gleichförmige Spur sein, beispielsweise ein Teil einer Kreisbahn, einer Ellipsenbahn oder dergleichen. Selbstverständlich kann diese pauschal vorgegebene Spur auch zumindest teilweise geradlinig oder vollständig geradlinig sein.

Bevorzugt kann auch vorgesehen sein, dass die durch die Spurvorgabeeinrichtung vorgegeben Spur während der Bewegung des Testfahrzeugs oder des Kollisionsobjekts dynamisch veränderbar ist. Dies ist eine vorteilhafte Ausgestaltung dahingehend, dass auch dann, wenn eine Spur vorgegeben ist und sich beispielsweise das Kollisionsobjekt bereits bewegt diese Spur auch noch verändert wird. Dadurch können sich verschiedenste Fahrszenarien ergeben. Insbesondere kann vorgesehen sein, dass die dynamische Veränderung der Spur während der Bewegung des Testfahrzeugs oder des Kollisionsobjekts durch eine Steuer- oder Regeleinheit geändert wird. Dazu kann ein stochastisches Modell zugrunde gelegt werden, nachdem die Steuer- und/oder Regeleinheit nach einer bestimmten Wahrscheinlichkeitsverteilung zeitabhängig und/oder streckenabhängig und/oder abhängig vom bisherigen Verlauf der vorgegebenen Spur und/oder abhängig vom noch zu durchfahrenden Verlauf der vorgegebenen Spur diese noch zu durchfahrende Spur ändert.

Vorzugsweise umfasst die Spurvorgabeeinrichtung eine reale Fahrbahn in Form eines entsprechend ausgebildeten und realitätsnah empfundenen Teilstücks. In dieser Fahrbahn ist vorzugsweise eine Schienenvorrichtung ausgebildet, welche insbesondere versenkt bzw. eingesenkt darin angeordnet ist. Insbesondere kann vorgesehen sein, dass die Bewegung des Kollisionsobjekts vor dem Ort der maximalsten Annäherung zwischen dem Testfahrzeug und dem Kollisionsobjekt durch diese Schienenvorrichtung vorgebbar ist. Selbstverständlich kann für diesen Abschnitt der Spur auch eine Seilführung oder eine Fernsteuerung oder auch eine autonome Bewegung mit Kollisionsbestimmung und Eigenantrieb des Kollisionsobjekts realisiert sein.

Insbesondere ist vorgesehen, dass eine Antriebsvorrichtung zum Bewegen des Kollisionsobjekts in der Schiene der Schienenvorrichtung und/oder unter der Fahrbahn angeordnet ist. Dadurch kann eine platzsparende und nicht störende Ausgestaltung realisiert werden. Insbesondere kann dadurch erreicht werden, dass Sensorsignale von zu testenden Systemen nicht beeinträchtigt werden.

Insbesondere ist vorgesehen, dass die Bewegung des Kollisionsobjekts relativ zu einem stehenden Testfahrzeug derart ausgebildet ist, dass für die Bewegung des Kollisionsobjekts vor dem Ort der maximalsten Annäherung an das Testfahrzeug eine Schienenvorrichtung ausgebildet ist, durch welche die Spur für das Kollisionsobjekt vorgebbar ist. Für die Bewegung des Kollisionsobjekts nach dem Ort der maximalsten Annäherung zwischen dem Testfahrzeug und dem Kollisionsobjekt ist dann vorzugsweise die Seilzugvorrichtung der Spurvorgabeeinrichtung vorgesehen und eine entsprechende Teilspur vorgebbar. Diese Seilkonstruktion ermöglicht flexibel veränderbar und leicht durchführbar unterschiedliche gekrümmte Spurverläufe und ermöglicht vor allem Bahnänderungen mit großer Krümmung. Im einfachsten Fall kann vorgesehen sein, dass der Prüfkörper bzw. das Kollisionsobjekt ab einem wählbaren Startpunkt auf einer Kreisbahn mit wählbarem Radius gezwungen wird. Weitere mögliche Bahnformen könnten Ellipsen, Parabeln oder Hyperbeln etc. sein. Weitere freie Kurvenformen und individuelle Spurführungen können dadurch erzielt werden, dass während dem Bewegen des Kollisionsobjekts die Seillänge variiert wird.

Insbesondere umfasst das Testfahrzeug eine Detektoreinheit zur Erfassung der Umgebung des Testfahrzeugs. Dies gewährleistet eine sehr präzise Analyse von Fahrerassistenzsystemen mit derartigen Detektoreinheiten, wodurch einfach und hochreproduzierbar die Funktionsweise dieser Systeme realisiert werden kann. Insbesondere für Unfallfrüherkennungssysteme ist dies ein wesentlicher Vorteil.

Da die Seilbewegungen der Seilzugvorrichtung genau kontrolliert werden können, ermöglicht eine derartige Ausgestaltung eine hohe Reproduzierbarkeit der Versuchsdurchführung. Zudem kann eine Vielzahl von Fahrszenarien dargestellt werden. Insbesondere sind Versuchsdurchführungen mit Querverkehr und schräg entgegenkommendem Verkehr möglich. Dadurch kann eine Vielzahl von Lastfällen für seitliche, frontseitige und heckseitige Unfallfrüherkennung abgedeckt werden. Darüber hinaus erhöht die vorgeschlagene Vorrichtung die Sicherheit für Versuchsausrüstung und Versuchspersonal erheblich.

Die Antriebsvorrichtung zum Bewegen des Testfahrzeugs kann als Elektromotor mit Schleifkontakten, als Linearmotor oder als Verbrennungsmotor ausgeführt sein. Durch die Anordnung unter der Fahrbahn können Störsignale vermieden werden.

Das Kollisionsobjekt kann in unterschiedlicher Weise ausgeführt sein. Neben den bereits oben genannten Möglichkeiten kann auch vorgesehen sein, dass es beispielsweise ein Tier oder ortsfeste Hindernisse wie z. B. einen Leitpfosten oder einen Baum oder dergleichen darstellt. Das Kollisionsobjekt kann in Leichtbauweise als dreidimensionales Versuchsobjekt eingesetzt werden, und es gewährleistet auch hier die einfache Handhabung und Montage.

Eine erfindungsgemäße Einrichtung zur Funktionsprüfung eines Fahrerassistenzsystems umfasst ein Testfahrzeug, in dem das eine Detektoreinheit zur Erfassung der Umgebung des Testfahrzeugs aufweisende Fahrerassistenzsystem angeordnet ist. Darüber hinaus umfasst die Einrichtung eine erfindungsgemäße Vorrichtung zum Herbeiführen von kollisionsnahen und kollisionsfreien Situationen zwischen dem Testfahrzeug und einem Kollisionsobjekt oder eine vorteilhafte Ausgestaltung davon. Durch diese Einrichtung kann eine wesentlich flexiblere und realitätsnähere und darüber hinaus auch verschleißärmere Durchführung von Tests von derartigen elektronischen Systemen im Fahrzeug ermöglicht werden. Zum einen kann hier insbesondere gewährleistet werden, dass tatsächlich Kollisionen vermieden werden, dennoch ein äußerst nahes Annähern gewährleistet werden kann und darüber hinaus auch Fahrszenen untersucht werden können, die nach dem Ort der maximalsten Annäherung zwischen dem Testfahrzeug und dem Kollisionsobjekt stattfinden. Derartiges ist bisher bei den bekannten Testvorrichtungen nicht möglich.

Bei einem erfindungsgemäßen Verfahren zum Herbeiführen von kollisionsnahen und kollisionsfreien Situationen zwischen einem Testfahrzeug und einem Kollisionsobjekt, mit dem Testfahrzeug, dem Kollisionsobjekt und einer Spurvorgabeeinrichtung wird zumindest das Testfahrzeug oder zumindest das Kollisionsobjekt bei der Annäherung an das jeweils andere Element, sprich dem Testfahrzeug oder Kollisionsobjekt, und einer Vorbeiführung an diesem jeweils anderen Element eine kollisionsnahe und dennoch kollisionsfreie Spur durch die Spurvorgabeeinrichtung vorgegeben.

Vorteilhafte Ausgestaltungen der erfindungsgemäßen Vorrichtung sind als vorteilhafte Ausgestaltungen der erfindungsgemäßen Einrichtung und des erfindungsgemäßen Verfahrens anzusehen.

Ausführungsbeispiele der Erfindung werden nachfolgend anhand schematischer Zeichnungen näher erläutert. Es zeigen:
- Fig. 1: ein erstes Ausführungsbeispiel einer erfindungsgemäßen Vorrichtung;
- Fig. 2: ein zweites Ausführungsbeispiel einer erfindungsgemäßen Vorrichtung; und
- Fig. 3: ein drittes Ausführungsbeispiel einer erfindungsgemäßen Vorrichtung.

In den Figuren werden gleiche oder funktionsgleiche Elemente mit den gleichen Bezugszeichen versehen.

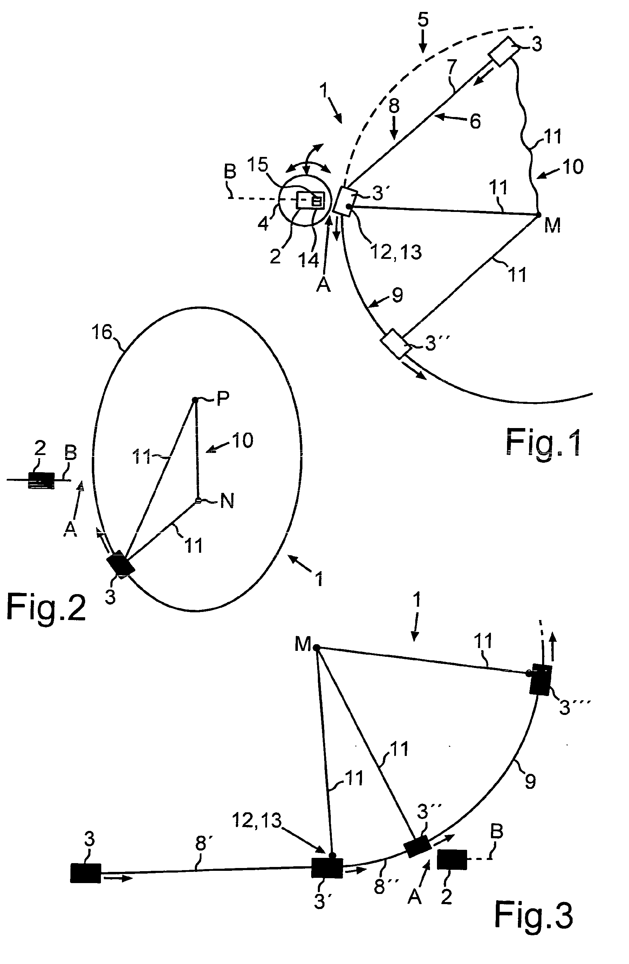

In Fig. 1 ist in einer schematischen Darstellung ein erstes Ausführungsbeispiel eine Vorrichtung 1 zum Herbeiführen von kollisionsnahen und kollisionsfreien Situationen zwischen einem Fahrzeug 2 und einem Kollisionsobjekt 3, 3', 3", gezeigt. Die Vorrichtung 1 umfasst das Testfahrzeug 2, welches ein reales Fahrzeug ist. Darüber hinaus umfasst die Vorrichtung 1 das Kollisionsobjekt 3, 3', 3". Das Kollisionsobjekt 3 ist ein einziges Objekt und durch die Bezugszeichen 3, 3', 3" sind lediglich verschiedene Positionen während eines Fortbewegens entlang einer Spur symbolisiert. Das Kollisionsobjekt 3 kann ein spezifischer Prüfkörper sein, welcher beispielsweise ein anderes Kraftfahrzeug, ein Kraftrad, eine Person, ein Tier, ein Verkehrszeichen, ein Baum oder dergleichen etc. darstellen kann.

Im Ausführungsbeispiel ist vorgesehen, dass das Testfahrzeug 2 ortsfest angeordnet ist und das Kollisionsobjekt 3 sich relativ zu dem Testfahrzeug 2 bewegt.

Das Testfahrzeug 2 ist auf einer Plattform 4 ortsfest angeordnet, wobei die Plattform 4 sich in der Figurenebene drehen kann. Darüber hinaus ist die Plattform 4 so ausgebildet, dass sie aus der Figurenebene heraus kippbar und schwenkbar ist, so dass auf das Testfahrzeug 2 Nick- und/oder Wankbewegungen übertragbar sind. Dies ist durch die beiden Doppelpfeile benachbart zur Plattform 4 angedeutet.

Die Vorrichtung 1 umfasst darüber hinaus eine Spurvorgabeeinrichtung 5, welche im Ausführungsbeispiel für das Kollisionsobjekt 3 bei der Annäherung an das Testfahrzeug 2 und einer Vorbeiführung an dem Testfahrzeug 2 zur Vorgabe einer kollisionsnahen und bzw. jedoch kollisionsfreien Spur ausgebildet ist.

Im Ausführungsbeispiel ist das Kollisionsobjekt 3 am Startpunkt gezeigt, wobei sich die durch die Spurvorgabeeinrichtung 5 vorgegebene Spur durch den Weg von dem Startpunkt des Kollisionsobjekts 3 über die gezeigte Zwischenposition mit dem Bezugszeichen 3' bis zur Position an dem das Kollisionsobjekt 3 mit dem Bezugszeichen 3" versehen ist, erstreckt. Die Spur bildet sich somit durch eine erste Teilspur 8, welche durch den Weg zwischen den Positionen, an dem das Kollisionsobjekt 3 mit dem Bezugszeichen 3 und 3' versehen ist. Diese erste Teilspur 8 erstreckt sich somit vor dem Ort A der maximalsten Annäherung, welcher zwischen dem Testfahrzeug 2 und dem Kollisionsobjekt 3 an dessen Position 3' ausgebildet ist. An diesem Ort A der maximalsten Annäherung sind das Testfahrzeug 2 und das Kollisionsobjekt 3 berührungsfrei an der Positon 3' angeordnet.

Gemäß der Darstellung in Fig. 1 ist die erste Teilspur 8 durch einen geradlinigen Verlauf der Spur gekennzeichnet. Die zweite Teilspur 9 ist vollständig nicht-geradlinig ausgebildet, wobei sich die zweite Teilspur 9 zwischen den Positionen 3' und 3"des Kollisionsobjekts 3 erstreckt. Die zweite Teilspur 9 erstreckt sich somit nach dem Ort A der maximalsten Annäherung.

Die Spurvorgabeeinrichtung 5 umfasst im Ausführungsbeispiel gemäß Fig. 1 eine Schienenvorrichtung 6 mit einer Schiene 7. Die Schiene 7 ist in einer Fahrbahn eingelassen bzw. eingesenkt und das Kollisionsobjekt 3 wird auf dem Weg zu seiner Position zum Ort A in dieser Schiene 7 geradlinig fortbewegt. Dazu kann ein nicht dargestellter Antriebsmotor vorgesehen sein, welcher vorzugsweise in der Schiene 7 und/oder unterhalb der Fahrbahn angeordnet ist.

Darüber hinaus umfasst die Vorrichtung 1 eine Seilzugvorrichtung 10, welche ein Seil 11 aufweist. Das Seil 11 ist an einem Punkt M befestigt und kann beispielsweise auf einer elektronisch gesteuerten Seilwinde aufgewickelt sein. Gemäß der Darstellung in Fig. 1 ist zu erkennen, dass das Kollisionsobjekt 3 bereits am Startpunkt mit dem dann nicht gespannten Seil 11 verbunden sein kann. Erst am Ort A, bei dem der Wechsel zwischen der ersten Teilspur 8 und der zweiten Teilspur 9 erfolgt, wird die Spur des Kollisionsobjekts 3 an der Position 3' dann nicht mehr durch die Schienenvorrichtung 6, sondern durch die Seilzugvorrichtung 10 vorgegeben, indem das Seil 11 gespannt ist, das Kollisionsobjekt 3 dort aus der Schiene 7 herausläuft und durch das gespannte und längenstabil gehaltene Seil 11 auf die gezeigte Kreisbahn gemäß der zweiten Teilspur 9 gezogen wird.

Im gezeigten Ausführungsbeispiel bleibt die Länge des Seils 11 zwischen den Positionen 3' und 3" des Kollisionsobjekts 3 konstant. Es kann auch vorgesehen sein, dass die Länge des Seils 11 während der Bewegung des Kollisionsobjekts 3 auf der zweiten Teilspur 9 verändert wird.

Vorzugsweise ist vorgesehen, dass das Kollisionsobjekt 3 am gezeigten Startpunkt noch nicht mit dem Seil 11 verbunden ist. Eine Verbindung mit dem Seil 11 ist dann vorzugsweise am Ort A vorgesehen, wobei in diesem Zusammenhang dort ein automatisches Verbinden des Kollisionsobjekts 3' mit dem Seil 11 vorgesehen sein kann. In diesem Zusammenhang kann das Seil 11 und auch das Kollisionsobjekt 3 jeweils eine Fangeinheit 12 bzw. 13 aufweisen, und beim Vorbeibewegen des Kollisionsobjekts 3' kann ein automatisches Verhaken oder Eingreifen der Fangeinheiten 12 und 13 ineinander vorgesehen sein.

Es kann selbstverständlich auch vorgesehen sein, dass auch bereits die erste Teilspur 8 einen zumindest teilweise nicht-geradlinigen Spurverlauf aufweist, wie durch die gestrichelte Kreisbahn gezeigt ist.

Die Längenveränderung des Seils 11 kann automatisch durch eine Steuer-und/oder Regeleinheit erfolgen, wobei die Längenveränderung abhängig von verschiedensten Parametern erfolgen kann. Beispielsweise kann dies abhängig vom Kollisionsobjekt 3 und/oder abhängig von dessen Geschwindigkeit und/oder abhängig von dem Verlauf der Teilspur 8. Dies sind nur einige beispielhafte Parameter, von denen abhängig die dynamische Längenveränderung des Seils 11 erfolgen kann.

Selbstverständlich kann auch vorgesehen sein, dass die Geschwindigkeit des Kollisionsobjekts 3 während dem Fortbewegen auf der ersten Teilspur 8 und/oder auf der zweiten Teilspur 9 jeweils zumindest einmal veränderbar ist. Auch dies kann elektronisch gesteuert abhängig von unterschiedlichsten Parametern, beispielsweise den oben genannten, erfolgen.

Ebenso kann vorgesehen sein, dass die Steuer- und/oder Regeleinheit dazu ausgebildet ist, dass vor dem Starten des Kollisionsobjekts 3 eine Gesamtspur, umfassend die erste Teilspur 8 und die zweite Teilspur 9, vorgegeben ist und diese während dem dann tatsächlichen Bewegen des Kollisionsobjekts 3 nicht verändert wird. Es kann jedoch auch vorgesehen sein, dass diese vorgegebene Spur während dem Bewegen des Kollisionsobjekts dynamisch verändert wird, wobei diese Veränderung über eine gewisse Wahrscheinlichkeitsverteilung ausgewählt und erzeugt werden kann.

Dadurch können auch unvorhergesehene Spurverläufe generiert werden und unterschiedlichste Fahrszenarien erzeugt werden.

Insbesondere weist das Fahrzeug 2 ein Fahrerassistenzsystem 14 auf, welches eine Detektoreinheit 15 umfasst. Die Detektoreinheit 15 ist zur Erfassung der Umgebung des Kraftfahrzeugs 2 ausgebildet. Insbesondere ist das Fahrerassistenzsystem 14 ein Unfallfrüherkennungssystem, wodurch durch Vorrichtung 1 besonders exakt und präzise unterschiedlichste kritische Situationen im Hinblick auf bevorstehende oder gerade noch vermeidbare Kollisionen analysierbar sind.

Durch die Darstellung in Fig. 1 ist somit auch eine Einrichtung zur Funktionsprüfung des Fahrerassistenzsystems 14 gezeigt, wobei die Einrichtung das Testfahrzeug 2, die Detektoreinheit 15 und die Vorrichtung 1 umfasst.

In Fig. 2 ist in beispielhafter Darstellung ein weiteres Ausführungsbeispiel einer Vorrichtung 1 gezeigt, bei der das Kollisionsobjekt 3 permanent mit dem gespannten Seil 11 bei seiner Fortbewegung verbunden ist. Durch Variation der Seillänge 11 kann das Kollisionsobjekt 3 auf einer nicht kreisrunden, aber dennoch eckenfreien Bahn bewegt werden, welche beispielsweise eine Ellipse sein kann.

In Fig. 3 ist in einer weiteren schematischen Darstellung ein weiteres Ausführungsbeispiel der Vorrichtung 1 gezeigt.

Bei der Darstellung in Fig. 1 bewegt sich das Kollisionsobjekt 3 beim Fortbewegen auf der ersten Teilspur 8 in einem Winkel zur horizontal orientierten Längsachse B des Testfahrzeugs 2.

Bei der Ausführung in Fig. 2 umfasst die Seilzugvorrichtung 10 das Seil 11, welches um zwei Umlenkpunkte N und P so umgelenkt werden kann, dass die gezeigte elliptische Bahn durch das Kollisionsobjekt 3 durchlaufen wird. Sowohl vor dem Ort A der maximalsten Annäherung zwischen dem Testfahrzeug 2 und dem Kollisionsobjekt 3 als auch nach diesem Ort A ist die durch die Spurvorgabeeinrichtung 5 erzeugte Spur 16 vollständig nicht-geradlinig ausgebildet.

Selbstverständlich kann die Seilzugvorrichtung 10 auch anderweitig ausgebildet sein, um die Spur 16 erzeugen zu können. Insbesondere kann auch eine Ausgestaltung gemäß der Darstellung in Fig. 1 vorgesehen sein, wobei dann die entsprechende Längenveränderung des einen Seils 11 bedarfsabhängig auf dem Fortbewegungsweg des Kollisionsobjekts 3 einstellbar ist.

In Fig. 3 ist ein weiteres Ausführungsbeispiel der Vorrichtung 1 gezeigt bei dem das Kollisionsobjekt 3 sich zunächst frontal auf das Testfahrzeug 2 zubewegt und sich somit quasi parallel zur Längsachse B bewegt. Die erste Teilspur setzt sich bei diesem Ausführungsbeispiel aus einem geradlinigen Verlauf 8' und einem nicht-geradlinigen Verlauf 8" vor dem Ort A der maximalsten Annäherung zwischen dem Kollisionsobjekt 3 und dem Testfahrzeug 2 zusammen. Dazu wird auf diesen Verläufen 8' und 8" bereits vor dem Ort A das Kollisionsobjekt 3 mit dem Seil 11 verbunden, in dem die Fangeinheiten 12 und 13 ineinander greifen. Auf dem Verlauf 8' der ersten Teilspur kann das Kollisionsobjekt 3 frei beweglich sich bewegen, beispielsweise ferngesteuert, oder wiederum beispielsweise durch eine Schienenvorrichtung entsprechend geleitet werden.

Durch das Seil 11, welches vorzugsweise seine Länge nicht verändert, wird das Kollisionsobjekt 3 dann nach dem Überschreiten des Orts A über eine Kreisbahn, welche die zweite Teilspur 9 darstellt, weiterbewegt und entfernt sich vom Testfahrzeug 2 bis das Kollisionsobjekt 3 die entsprechend gezeigte Position 3" bzw. 3"' erreicht hat. Es kann sich natürlich auch darüber hinaus weiterbewegen und entsprechend gestaltete weitere Spurverläufe durchführen.

## Patentansprüche

1. Vorrichtung zum Herbeiführen von kollisionsnahen Situationen zwischen einem Testfahrzeug (2) und einem Kollisionsobjekt (3, 3', 3", 3"'), mit dem Testfahrzeug (2), dem Kollisionsobjekt (3, 3', 3", 3"') und einer Spurvorgabeeinrichtung (5), welche für zumindest das Testfahrzeug (2) oder zumindest das Kollisionsobjekt (3, 3', 3", 3"') bei der Annäherung an das jeweils andere Element (2; 3, 3', 3", 3"') und einer Vorbeiführung an dem jeweils anderen Element (2; 3, 3', 3", 3"') zur Vorgabe einer kollisionsnahen und kollisionsfreien Spur (8, 8', 8", 9, 16) ausgebildet ist.

2. Vorrichtung nach Anspruch 1, bei welcher das Testfahrzeug (2) ortsfest angeordnet ist und durch die Spurvorgabeeinrichtung (5) eine Spur (8, 8', 8", 9, 16) für das bewegte Kollisionsobjekt (3, 3', 3", 3"') vorgegeben ist.

3. Vorrichtung nach Anspruch 1 oder 2, bei welcher das Testfahrzeug (2) auf einer drehbaren Plattform (4) angeordnet, insbesondere ortsfest angeordnet, ist.

4. Vorrichtung nach einem der vorhergehenden Ansprüche, bei welcher das Testfahrzeug (2) auf einer Plattform (4) ortsfest angeordnet ist, welche so bewegbar ist, dass auf das Testfahrzeug (2) Nick- und/oder Wankbewegungen übertragbar sind.

5. Vorrichtung nach einem der vorhergehenden Ansprüche, bei welcher die Spurvorgabeeinrichtung (5) zur Vorgabe einer zumindest teilweise nicht-geradlinigen Spur (8, 8', 8", 9, 16) ausgebildet ist.

6. Vorrichtung nach Anspruch 5, bei welcher die durch die Spurvorgabeeinrichtung (5) vorgegebene Spur (8, 8', 8", 9, 16) vor dem Ort (A) der maximalsten Annäherung zwischen dem Testfahrzeug (2) und dem Kollisionsobjekt (3, 3', 3", 3"') zumindest eine erste nicht-geradlinige Teilspur (8", 16) aufweist und/oder nach dem Ort (A) der maximalsten Annäherung zwischen dem Testfahrzeug (2) und dem Kollisionsobjekt (3, 3', 3", 3"') zumindest eine zweite nicht-geradlinige Teilspur (9, 16) aufweist.

7. Vorrichtung nach Anspruch 6, bei welcher die erste (8", 16) und die zweite nicht-geradlinige Teilspur (9, 16) ausgebildet sind und die beiden Teilspuren (8", 9, 16) unterschiedliche nicht-geradlinige Verläufe aufweisen.

8. Vorrichtung nach einem der vorhergehenden Ansprüche, bei welcher die durch die Spurvorgabeeinrichtung (5) vorgegeben Spur (8, 8', 8", 9, 16) einen vor dem Ort (A) der maximalsten Annäherung zwischen dem Testfahrzeug (2) und dem Kollisionsobjekt (3, 3', 3", 3"') ausgebildeten ersten Verlauf aufweist und einen nach dem Ort (A) der maximalsten Annäherung zwischen dem Testfahrzeug (2) und dem Kollisionsobjekt (3, 3', 3", 3"') ausgebildeten und zum ersten unterschiedlichen zweiten Verlauf aufweist, und der Wechsel zwischen dem ersten und dem zweiten Verlauf am oder vor dem Ort (A) der maximalsten Annäherung zwischen dem Testfahrzeug (2) und dem Kollisionsobjekt (3, 3', 3", 3"') ausgebildet ist.

9. Vorrichtung nach Anspruch 8, bei welcher der Wechsel des Verlaufs der Spur (8, 8', 8", 9, 16) durch die Spurvorgabeeinrichtung (5) automatisch erzeugbar ist.

10. Vorrichtung nach Anspruch 8 oder 9, bei welcher die Spurvorgabeeinrichtung (5) eine Seilzugvorrichtung (10) mit einem Seil (11) umfasst, mittels welchem das Kollisionsobjekt (3, 3', 3", 3"') verbindbar ist und entlang des zweiten Verlaufs der Spur (8, 8', 8", 9, 16) bewegbar ist.

11. Vorrichtung nach Anspruch 10, bei welcher die Seilzugvorrichtung (10) eine Fangeinheit (12, 13) am Seil (11) aufweist, welche automatisch abhängig vom Ort des Kollisionsobjekts (3, 3', 3", 3"') während dessen Fortbewegen, insbesondere am Ort (A) der maximalsten Annäherung zwischen dem Testfahrzeug (2) und dem Kollisionsobjekt (3, 3', 3", 3"'), in eine Fangeinheit (12, 13) am Kollisionsobjekt (3, 3', 3", 3"') eingreift.

12. Vorrichtung nach Anspruch 10 oder 11, bei welcher die Seilzugvorrichtung (10) zur dynamischen Längenveränderung des Seils (11) während der Bewegung des Kollisionsobjekts (3, 3', 3", 3"') nach dem Ort (A) der maximalsten Annäherung zwischen dem Testfahrzeug (2) und dem Kollisionsobjekt (3, 3', 3", 3"') ausgebildet ist.

13. Vorrichtung nach einem der vorhergehenden Ansprüche, bei welcher die durch die Spurvorgabeeinrichtung (5) vorgegebene Spur (8, 8', 8", 9, 16) während der Bewegung des Testfahrzeugs (2) oder des Kollisionsobjekts (3, 3', 3", 3"') unverändert bleibt.

14. Vorrichtung nach einem der Ansprüche 1 bis 12, bei welcher die durch die Spurvorgabeeinrichtung (5) vorgegebene Spur (8, 8', 8", 9, 16) während der Bewegung des Testfahrzeugs (2) oder des Kollisionsobjekts (3, 3', 3", 3"') dynamisch veränderbar ist.

15. Vorrichtung nach einem der vorhergehenden Ansprüche, bei welcher die Spurvorgabeeinrichtung (5) eine Fahrbahn umfasst, in welcher eine Schienenvorrichtung (6) ausgebildet ist, insbesondere eingesenkt ist.

16. Vorrichtung nach Anspruch 15, bei welcher eine Antriebsvorrichtung zum Bewegen des Testfahrzeugs (2) oder des Kollisionsobjekts (3, 3', 3", 3"') in der Schiene (7) der Schienenvorrichtung (6) und/oder unter der Fahrbahn angeordnet sind.

17. Vorrichtung nach einem der vorhergehenden Ansprüche, bei welcher das Testfahrzeug (2) eine Detektoreinheit (15) zur Erfassung der Umgebung des Testfahrzeugs (2) aufweist.

18. Einrichtung zur Funktionsprüfung eines Fahrerassistenzsystems (14), mit einem Testfahrzeug (2), in dem das eine Detektoreinheit (15) zur Erfassung der Umgebung des Testfahrzeugs (2) aufweisende Fahrerassistenzsystem (14) angeordnet ist, und mit einer Vorrichtung (1) nach einem der vorhergehenden Ansprüche.

19. Verfahren zum Herbeiführen von kollisionsnahen Situationen zwischen einem Testfahrzeug (2) und einem Kollisionsobjekt (3, 3', 3", 3"'), mit dem Testfahrzeug (2), dem Kollisionsobjekt (3, 3', 3", 3"') und einer Spurvorgabeeinrichtung (5), bei welchem für zumindest das Testfahrzeug (2) oder zumindest das Kollisionsobjekt (3, 3', 3", 3"') bei der Annäherung an das jeweils andere Element (2, 3, 3', 3", 3"') und einer Vorbeiführung an dem jeweils anderen Element (2, 3, 3', 3", 3"') eine kollisionsnahe und kollisionsfreie Spur (8, 8', 8", 9, 16) durch die Spurvorgabeeinrichtung (5) vorgegeben wird.
